# EUROPÄISCHE PATENTANMELDUNG

(11) **EP 4 550 717 A1**
(43) Veröffentlichungstag der Anmeldung: **07.05.2025**
(21) Anmeldenummer: 23207940.0
(22) Anmeldetag: 06.11.2023
(51) Int. Cl.: H04L 9/08, H04L 9/32

(54) **GENERIEREN EINES KRYPTOGRAPHISCHEN SCHLÜSSELS BASIEREND AUF FINGERABDRÜCKEN VON HARDWAREKOMPONENTEN**

(71) Anmelder: Siemens Aktiengesellschaft, 80333 München (DE)
(72) Erfinder: Aghaie, Anita, 81379 München (DE); Falk, Rainer, 85435 Erding (DE); Maftun, Aliza, 81247 München (DE); Papagudi Subrahmanyam, Niranjana, 85540 Haar (DE); Passarelli, Anne, 80809 München (DE); Safieh, Malek, 81539 München (DE); Schneider, Daniel, 80796 München (DE)
(74) Vertreter: Siemens Patent Attorneys

(57) **Zusammenfassung**

Die Erfindung betrifft ein Verfahren zum Generieren eines ersten kryptographischen Schlüssels (K1) für ein System (3), wobei das System (3) Hardwarekomponenten (1, 2) aufweist, mit den Schritten:
- Ein Heranziehen eines ersten Gruppenlabels einer ersten Gruppe,
wobei das erste Gruppenlabel erste Hardwarekomponenten (1) der ersten Gruppe zuordnet,
wobei die Hardwarekomponenten (1, 2) des Systems (3) die ersten Hardwarekomponenten (1) umfassen,

- Ein Heranziehen erster Fingerabdrücke der ersten Hardwarekomponenten (1),
- ein Generieren des ersten kryptographischen Schlüssels (K1),
wobei das Generieren durch ein Ableiten des ersten kryptographischen Schlüssels (K1) von den ersten Fingerabdrücken erfolgt.

Außerdem betrifft die Erfindung ein zugehöriges Computerprogramm und ein übergeordnetes System (3).

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Generieren eines ersten kryptographischen Schlüssels für ein System, wobei das System Hardwarekomponenten aufweist. Außerdem betrifft die Erfindung ein zugehöriges Computerprogramm und ein übergeordnetes System.

### Beschreibung des Stands der Technik

Wichtige Anforderungen für kryptographische Sicherheitsverfahren in Geräten, insbesondere im Internet-of-Things-Umfeld (IoT-Umfeld), ist die sichere Speicherung kryptographischer Schlüssel und dass nur berechtigte Instanzen des IoT-Geräts auf kryptographischen Schlüssel zugreifen beziehungsweise diese nutzen können.

Häufig werden kryptographische Schlüssel in Hardware (HW)-basierten Secure Elements und/oder Vertrauensankern sicher gespeichert, insbesondere in Trusted Platform Modules (TPMs) oder in Hardware Security Modules (HSMs). Ein kryptographischer Schlüssel kann auch unter Nutzung einer Physical Unclonable Function (PUF) auf sichere Art und Weise (d.h. unter Nutzung von Verfahren, welche die Sicherheit erhöhen bzw. gewährleisten sollen) gespeichert werden. Diese Art der Speicherung ermöglicht es, den kryptographischen Schlüssel nicht permanent explizit speichern zu müssen, sondern ihn nur bei Bedarf wiederholt unter Nutzung der PUF und von gespeicherten Helper-Daten zu generieren.

Oft wird "nur" ein initialer ("Master-") Schlüssel sicher gespeichert und zur Laufzeit werden durch eine Schlüsselableitungsfunktion (Key Derivation Function - KDF) weitere Schlüssel erzeugt, wenn diese benötigt werden.

Bekannt sind Secure Elements (SE), die kryptographische Schlüssel auf sichere Art und Weise speichern. Bekannt sind auch zusätzlich Authentifizierungsmethoden, die den Zugriff auf diese Schlüssel im SE erlauben. Ein Secure Element kann Tamper-geschützt sein. Dadurch wird jedoch nur das SE selbst geschützt, nicht das IoT-Gerät als Ganzes.

Von Hardware Security Modulen ist ein Tamper-Schutz bekannt, der ein Eindringen in das Gerät verhindert. Dazu können z.B. Gehäuseschalter, Bohrschutzfolien oder Strahlungssensoren vorgesehen sein. Eine Tamper-Überwachung ist jedoch sehr aufwendig, auch da eine dauerhafte Überwachung eine Batterie benötigt.

Es ist außerdem bekannt, dass eine Art Bohrschutzfolie ähnlich wie eine Halbleiter-PUF für die Schlüsselgenerierung oder Schlüsselspeicherung verwendet werden kann (Siemens, "TAMPER PROTECTION DEVICE FOR PROTECTING A FIELD DEVICE AGAINST TAMPERING", EP2673733B1; US9858446B2).

Bekannt sind außerdem Physical Unclonable Functions (PUFs), die einen HW-spezifischen Fingerabdruck in einer CMOS-Schaltung erzeugen können. Dieser, in der Regel nach einer Fehlerkorrektur (Fuzzy Key Extractor mit Helper-Daten) erzeugte, Fingerabdruck, oder eine Ableitung aus diesem, kann entweder als Device-spezifischer Schlüssel oder auch als "Identität / Fingerabdruck" zur Identifizierung oder Authentifizierung verwendet werden.

Eine Art einer "weak PUF" ist die optische PUF, auch "Optical Physical One-Way Functions (OPOWFs)" genannt. Ihr Mechanismus basiert auf optischen Systemen/Sensoren, die für jede einzelne Auslesung exakt dieselbe relative Positionierung der Lichtstreumarke, des Laserstrahls und der CCD-Kamera herstellen müssen. Die Umsetzung ist teuer und möglicherweise fehleranfällig.

Bekannt sind außerdem unterschiedliche Security-Zustände, in dem sich ein Gerät befinden kann.

Bekannt sind außerdem Schlüsselableitungsfunktionen (Key Derivation Functions). Dabei wird aus einem kryptographischen Schlüssel (oder anderen Daten) und einem Ableitungsparameter ein weiterer kryptographischer Schlüssel abgeleitet. Als Ableitungsparameter kann beispielsweise ein Identifier einer Software-Komponente, einer Hardware-Komponente oder eine Zeichenkette, die den Zweck des abgeleiteten Schlüssels charakterisiert, verwendet werden. Durch eine Schlüsselableitungsfunktionen lassen sich, ausgehend von einem Schlüssel, mehrere Schlüssel ableiten.

Es ist außerdem ein sicheres Booten (Secure Boot, Verified Boot, Measured Boot, Trusted Boot, ...) mit kryptographischer Verifikation von Softwarekomponenten bekannt. Es ist weiterhin bekannt, dass bei einem sicheren Boot-Vorgang auch die Identität von Hardware-Komponenten überprüft werden kann.

Es sind außerdem "Sealed objects" bei TPMs bekannt. Abhängig vom Inhalt sogenannter Platform Configuration Register (PCR), dessen Inhalt abhängig von HW-oder SW-Komponenten des Systems ist, kann ein TPM-Objekt (z.B. kryptographischer Schlüssel) ausgeben werden oder nicht. Die Inhalte der PCR werden z.B. während des Bootvorgangs eines Systems gefüllt und geben eine Aussage über den Integritäts-Zustand des Systems an.

Bekannt ist außerdem ein "Node-locked licensing". Dabei wird eine Software-Lizenz an eine HW-Identity (ID) gebunden. Nur wenn die entsprechende HW-ID korrekt ist, ist die Lizenz für die Software-Applikation gültig.

Eine Lizenzprüfung von Microsoft Windows überprüft mehrere Hardware-Komponenten. Kleinere Änderungen an den Hardwarekomponenten sind möglich, bei größeren Änderungen muss die Windows-Lizenz jedoch reaktiviert werden. ("If you make significant hardware changes on your device, such as replacing your motherboard, Windows will no longer find a license that matches your device, and you'll need to reactivate Windows to get it up and running.")

Die Aufgabe der Erfindung besteht darin, eine Lösung für ein verbessertes Generieren eines kryptographischen Schlüssels mit erhöhter Sicherheit bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Generieren eines ersten kryptographischen Schlüssels für ein System, wobei das System Hardwarekomponenten aufweist,
mit den Schritten:
- Ein Heranziehen (insbesondere auch ein Empfangen, ein Abrufen und/oder ein Definieren) eines ersten Gruppenlabels einer ersten Gruppe,
   wobei das erste Gruppenlabel erste Hardwarekomponenten der ersten Gruppe zuordnet,
   wobei die Hardwarekomponenten des Systems die ersten Hardwarekomponenten umfassen,
   (wobei die ersten Hardwarekomponenten somit zumindest ein Teil der Gesamtheit der Hardwarekomponenten des Systems sind,)
- Ein Heranziehen (insbesondere auch ein Empfangen und/oder ein Abrufen) erster Fingerabdrücke der ersten Hardwarekomponenten,
   (wobei insbesondere jeweils ein erster Fingerabdruck von den ersten Hardwarekomponenten herangezogen wird,
   wobei insbesondere jeweils ein erster Fingerabdruck von jeder der ersten Hardwarekomponenten herangezogen wird, und/oder
   wobei insbesondere jeweils mehr als ein erster Fingerabdruck von jeder der ersten Hardwarekomponenten herangezogen wird,)
- ein Generieren des ersten kryptographischen Schlüssels, wobei das Generieren durch ein Ableiten des ersten kryptographischen Schlüssels von den ersten Fingerabdrücken erfolgt.

Ein Aspekt der Erfindung besteht darin kryptographische Schlüssel (den ersten kryptographischen Schlüssel und weitere kryptographischen Schlüssel) abhängig vom Hardwarezustand (HW-Zustand) von definierten (bestimmten) Hardwarekomponenten des Systems zu generieren. Dadurch ist ein indirekter Schutz der Hardware Device Integrity geschaffen, denn kryptographische Schlüssel werden nur dann korrekt generiert, wenn der Hardware-Fingerabdruck (HW-Fingerprint) einer Gruppe von Hardwarekomponenten (der ersten Gruppe an ersten Hardwarekomponenten und/oder von weiteren Gruppen) korrekt ist. Dadurch wird der Zugriff auf kryptographische Schlüssel verhindert, wenn die HW-Integrität des Teil-Systems, welchem die entsprechende Gruppe an Hardwarekomponenten zugehörig ist, nicht vorhanden ist. Durch das vorgestellte Verfahren kann somit durch eine erfolgreiche Ableitung bestimmter kryptographische Schlüssel implizit auch die Integrität der Hardwarekomponenten dieser Gruppe überprüft werden.

Insbesondere umfasst die Erfindung auch, dass eine Vielzahl an ersten kryptographischen Schlüsseln abgeleitet wird. So werden von der ersten Gruppe bzw. den ersten Hardwarekomponenten mehrere erste kryptographische Schlüssel abgeleitet. Insbesondere ist es außerdem möglich, dass ein Output eines ersten Ableitens erneut in weiteres Ableiten fließt und daraus jeweils ein kryptographischer Schlüssel generiert wird, während der Schlüssel aus dem weiteren Ableiten insbesondere für eine weitere Verwendung vorgesehen ist. Insbesondere ist auch vorgesehen für unterschiedliche Schlüssel die Reihenfolge der Fingerprints für das Ableiten zu variieren und/oder einen weiteren Inputwert (unterschiedlich für jeden Schlüssel) für das Ableiten zu verwenden.

Falls einzelne Komponenten des Systems nach Auslieferung getauscht werden, so ergeben sich automatisch andere abgeleitete kryptographische Schlüssel. Dadurch ist gewährleistet, dass Daten, die mit einem kryptographischen Schlüssel verschlüsselt sind, der gemäß der ursprünglichen Original-Hardware-Konfiguration (Konfiguration der Hardwarekomponenten) abgeleitet wurde, nach einer Änderung und/oder Manipulation der Hardware-Konfiguration nicht mehr entschlüsselbar und somit geschützt sind.

Anders ausgedrückt sind bestimmte kryptographische Schlüssel in einem System nur ableitbar und/oder generierbar, wenn sichergestellt ist, dass bestimmte Hardwarekomponenten, die einer vordefinierten Gruppe angehören, integer sind; d.h. wenn diese Hardwarekomponenten nicht, durch Fake-Komponenten und/oder durch gleiche Originalkomponenten von anderen Originalsystemen und/oder durch manipulierte Hardwarekomponenten, ausgetauscht wurden und/oder die Hardwarekomponenten nicht defekt sind.

Die Integrität der einzelnen Hardwarekomponenten wird somit indirekt durch deren HW-Fingerprints bestimmt. Nur wenn die Fingerprints der einzelnen Hardwarekomponenten in einer Gruppe korrekt sind (d.h. wenn die Hardwarekomponenten unverändert sind) und somit der Eingabewert für das Generieren des Schlüssels, insbesondere der Eingabewert der Schlüsselableitungsfunktion (Key Derivation Function (KDF)), korrekt ist, kann der korrekte kryptographische Schlüssel (d.h. ein brauchbarer Schlüssel), der dieser Gruppe zugeordnet ist, berechnet werden.

Die Erfindung bietet somit den Vorteil, dass die Sicherheit vor einem unbefugten Zugriff auf kryptographische Schlüssel in IoT-Geräten erhöht. Insbesondere ist nach einer Hardware-Manipulation des IoT-Geräts kein Zugriff mehr möglich.

Erfindungsgemäß sind Hardwarekomponenten einzelnen Gruppen zugeordnet. Die Zuordnung der Hardwarekomponenten erfolgt insbesondere aufgrund von Wichtigkeit, Relevanz und durch sie bereitgestellte Sicherheit.

Die Fingerabdrücke der Hardwarekomponenten stellen einen individuellen Wert bereit. Das Heranziehen (insbesondere auch ein Empfangen und/oder ein Abrufen) der ersten Fingerabdrücke der ersten Hardwarekomponenten erfolgt insbesondere von einer vertrauenswürdigen Einheit (Trusted Measurement App), welche die ersten Fingerabdrücke bereitstellt, d.h. insbesondere ermittelt und/oder welche die ersten Fingerabdrücke ausliest und insbesondere an die das erfindungsgemäße Verfahren durchführende Einheit weitergibt. In einer weiteren Variante stellt die vertrauenswürdige Einheit die Fingerabrücke indirekt bereit, insbesondere triggert die vertrauenswürdige Einheit die Hardwarekomponenten die Fingerabrücke zu erzeugen, wobei die Hardwarekomponenten insbesondere direkt mit der das erfindungsgemäße Verfahren durchführende Einheit verbunden sind und die Fingerabrücke direkt an die das erfindungsgemäße Verfahren durchführende Einheit weitergeben.

Die Hardwarekomponenten des Systems sind insbesondere ausgebildet als Prozessor, CPU, Speichereinheit, RAM, Flash, ASIC, FPGA, Sensor und/oder Schnittstellen nach außen (I/O Interfaces) .

In einer Weiterbildung der Erfindung gilt für die ersten Fingerabdrücke, dass sie:
- auf einem statischen Wert, (insbesondere einer Seriennummer einer der ersten Hardwarekomponenten) basieren und/oder
- durch ein Challenge-Response Verfahren generiert wurden und/oder
- durch eine Hardwarekomponenten-Physical-Unclonable-Function (HW-PUF) generiert wurden.

Die Fingerabdrücke können somit auf einem statischen Wert (z.B. Seriennummer der Komponente) basieren und/oder durch ein Challenge-Response Verfahren insbesondere durch die vertrauenswürdige Einheit (Trusted Measurement App) erzeugt werden.

Wurden die ersten Fingerabdrücke durch die Hardwarekomponenten-Physical-Unclonable-Function (HW-PUF) generiert, weisen die Fingerabdruckmodule der Hardwarekomponenten insbesondere jeweils eine Physical-Unclonable-Function (PUF) auf. Die Hardwarekomponenten einer Gruppe werden insbesondere in Reihe geschaltet. Die Ausgabe einer Hardwarekomponenten-PUF dient als Herausforderung für die nächste Hardwarekomponenten-PUF.

Sind die Fingerabdrücke durch eine PUF realisiert, ist zusätzlich ein Fehlerkorrekturverfahren für die Generierung des stabilen Fingerabdrucks nötig. Die Fehlerkorrekturfähigkeit sollte jedoch sorgfältig ausgewählt werden, sodass Fingerabdrücke einer falschen, geklonten oder defekten Hardwarekomponente nicht als korrekt erkannt werden können.

Speziell ist eine Kombination aus einem statischen Wert, einer Generation durch ein Challenge-Response Verfahren und einer Generation durch eine Hardwarekomponenten-Physical-Unclonable-Function (HW-PUF) möglich. PUFs können abhängig von unterschiedlichen Challenges, unterschiedliche Responses ausgeben. Hat die vertrauenswürdige Einheit alle zuvor gültigen Challenge-Response-Pairs sicher gespeichert, dann schickt in dieser Ausführungsform die Komponente immer andere Responses, abhängig von der von der vertrauenswürdigen Einheit geschickten Challenge. Die Response wird von der vertrauenswürdigen Einheit geprüft und falls korrekt, liefert sie einen fixen statischen Wert, den sie selbst sicher gespeichert hat, an eine Schlüsselableitungsfunktion weiter.

In einer weiteren Weiterbildung der Erfindung erfolgt das Generieren des ersten kryptographischen Schlüssels durch:
- eine Schlüsselableitungsfunktion (Key Derivation Function) (KDF) und/oder
- eine Schlüsselableitungs-Physical-Unclonable-Function (KD-PUF) (Key Derivation Physical Unclonable Function).

Durch die Schlüsselableitungsfunktion erfolgt das Generieren durch ein Ableiten des ersten kryptographischen Schlüssels von den ersten Fingerabdrücken. Die Fingerprints der Hardwarekomponenten werden als Eingabewert für die KDF verwendet und insbesondere konkateniert (d.h. aneinanderhängt, aneinanderreiht, verkettet, zusammenfügt und/oder verknüpft). Für das Ableiten des ersten kryptographischen Schlüssels von den ersten Fingerabdrücken wird eine Schlüsselableitungsfunktion (Key Derivation Function - KDF) herangezogen.

In einer weiteren Variante ist der erste kryptographische Schlüssel durch eine Physical-Unclonable-Function (PUF) generierbar, im Zusammenhang der Erfindung auch als Schlüsselableitungs-Physical-Unclonable-Function (KD-PUF) bezeichnet. Dies ermöglicht insbesondere den ersten kryptographischen Schlüssel direkt abzuleiten. Durch die Schlüsselableitungs-Physical-Unclonable-Function (KD-PUF) erfolgt das Generieren des ersten kryptographischen Schlüssels dadurch, dass die ersten Fingerabdrücke als Herausforderung für die KD-PUF verwendet werden, anschließend stellt die Schlüsselableitungs-Physical-Unclonable-Function (KD-PUF) ein Ergebnis bereit, wiederrum anschließend wird durch eine deterministische Funktion der erste kryptographische Schlüssel von dem Ergebnis, dass die Schlüsselableitungs-Physical-Unclonable-Function (KD-PUF) bereitstellte, abgeleitet. Der Grund für die Schlüsselableitungs-Physical-Unclonable-Function (KD-PUF) kann in der Schaffung einer höheren Abhängigkeit von den zufälligen physischen Fingerabdrücken wie PUF-Funktionen zusammengefasst werden.

Wie zum vorherigen Anspruch beschrieben, sind auch die ersten Fingerabrücke von einer PUF, Hardwarekomponenten-PUF genannt, generierbar. In Kombination mit der zu diesem Anspruch beschriebenen Ausführungsform erfolgt auch die Generierung des Schlüssels durch eine PUF (hier auch als Schlüsselableitungs-Physical-Unclonable-Function (KD-PUF) bezeichnet). In dieser Kombination wird eine separate Schlüsselableitungsfunktion durch die Schlüsselableitungs-Physical-Unclonable-Function (KD-PUF) ersetzt.

In einer weiteren Weiterbildung der Erfindung ist der erste kryptographische Schlüssel für eine definierte Entschlüsselung vorgesehen.

Die definierte Entschlüsselung ist auch als ein bestimmter und/oder definierter Zweck zu verstehen. Durch diese Ausführungsform wird die erfindungsmäßige Idee betont, kryptographische Schlüssel zu erzeugen, die jeweils einem bestimmten Zweck zugeordnet sind.

Ein abgeleiteter Schlüssel (d.h. der erste kryptographische Schlüssel) ist für einen bestimmten Zweck verwendbar, insbesondere für kryptographische Protokolle für eine Attestierung des Gerätezustandes und/oder zum Entschlüsseln von sensitiven Daten. Außerdem können asymmetrische Schlüssel mit dem ersten kryptographischen Schlüssel (insbesondere ausgebildet als ein symmetrischer Schlüssel) gewrapped und/oder verschlüsselt sein.

In einer weiteren Weiterbildung der Erfindung ist die definierte Entschlüsselung durch die erste Gruppe (und damit durch die ersten Hardwarekomponenten, d.h. durch die der ersten Gruppe zugeordneten Hardwarekomponenten) festgelegt.

Nach dieser Ausführungsform wird über die Gruppenzugehörigkeit der ersten Hardwarekomponenten die definierte Entschlüsselung, d.h. wofür der ersten kryptographischen Schlüssel einsetzbar ist festgelegt. Dies hat den Vorteil, dass die erste Gruppe ja nach gewünschtem Zweck des Schlüssels definiert werden kann, d.h. das erste Gruppenlabel entsprechend definiert wird.

In einer weiteren Weiterbildung der Erfindung erfolgt das Generieren des ersten kryptographischen Schlüssels:
- nachdem ein vertrauenswürdiger Systemzustand festgestellt wurde, wobei der vertrauenswürdige Systemzustand insbesondere als weiterhin vorliegend angenommen wird,
- bei einer ersten Inbetriebnahme des Systems,
- bei einer Wiederinbetriebnahme des Systems, insbesondere nach einem Angriff,
- im Rahmen einer Herstellung des Systems,
- bei einem Bootvorgang des Systems und/oder
- zur Laufzeit des Systems.

In einer weiteren Weiterbildung der Erfindung erfolgt das Generieren des ersten kryptographischen Schlüssels durch ein Ableiten außerdem von mindestens einem Software-Fingerabdruck, wobei der mindesten eine Software-Fingerabdruck von mindestens einer Softwarekomponenten des Systems stammt.

Es werden somit zusätzlich zu den Fingerabdrücken von Hardwarekomponenten auch Fingerabdrücke von Softwarekomponenten des Systems einbezogen. Dies erhöht die Sicherheit.

In einer weiteren Weiterbildung der Erfindung ist der erste kryptographische Schlüssel als ein symmetrischer kryptographischer Schlüssel und/oder ein asymmetrischer kryptographischer Schlüssel ausgebildet.

Falls mehrere erste kryptographische Schlüssel vorliegen, so ist insbesondere ein Teil davon asymmetrisch und ein anderer Teil symmetrisch.

Der abgeleitete Schlüssel ist somit nach einer Ausführungsform ein symmetrischer Schlüssel. Zusätzlich vorhandene asymmetrische Schlüssel sind mit dem symmetrischen Schlüssel insbesondere gewrapped und/oder verschlüsselt.

In einer weiteren Weiterbildung der Erfindung ordnet das erste Gruppenlabel erste Hardwarekomponenten der ersten Gruppe in Abhängigkeit einer Komponentenherstellerkennzeichnung zu.

In dieser Variante werden Hardwarekomponenten von einem Komponenten-Hersteller einer spezifischen Gruppe zugeordnet. Hardwarekomponenten von einem weiteren Komponenten-Hersteller werden einer weiteren Gruppe zugeordnet.

In einer weiteren Weiterbildung der Erfindung ordnet das erste Gruppenlabel erste Hardwarekomponenten der ersten Gruppe in Abhängigkeit eines Gruppen-Sicherheitslevels zu.

Hardwarekomponenten in einer Gruppe (der ersten Gruppe) lassen sich in dieser Variante einem bestimmten Gruppen-Sicherheitslevels (auch als Security-Level und/oder Security-Zone bezeichenbar) zuordnen: Bei einer höheren Sicherheitsanforderung sind durch das Sicherheitslevel Fingerabdrücke sicherheitskritischerer Hardwarekomponenten gefordert, um den korrespondierenden Schlüssel zu generieren. Diese werden entsprechen gruppiert und deren Fingerabrücke werden entsprechend der Gruppenzugehörigkeit für das Generieren des Schlüssels verwendet.

Für die Schlüsselgenerierung eines höheren Sicherheitslevels dient in einer weiteren Variante der zuvor für eine niedrigere Security-Level berechnete Schlüssel als Input für die Ableitung des Schlüssels.

In einer weiteren Weiterbildung der Erfindung weist das erfindungsgemäße Verfahren die weiteren Schritte auf:
- Ein Heranziehen (insbesondere auch ein Empfangen, ein Abrufen und/oder ein Definieren) eines zweiten Gruppenlabels einer zweiten Gruppe,
   wobei das zweite Gruppenlabel zweite Hardwarekomponenten der zweiten Gruppe zuordnet,
   wobei die Hardwarekomponenten des Systems die zweiten Hardwarekomponenten umfassen,
   (wobei die zweiten Hardwarekomponenten somit zumindest ein Teil der Gesamtheit der Hardwarekomponenten des Systems sind,)
- ein Heranziehen (insbesondere auch ein Empfangen und/oder ein Abrufen) zweiter Fingerabdrücke der zweiten Hardwarekomponenten,
   (wobei insbesondere jeweils ein zweiter Fingerabdruck von den zweiten Hardwarekomponenten herangezogen wird,
   wobei insbesondere jeweils ein zweiter Fingerabdruck von jeder der zweiten Hardwarekomponenten herangezogen wird, und/oder
   wobei insbesondere jeweils mehr als ein zweiter Fingerabdruck von jeder der zweiten Hardwarekomponenten herangezogen wird,)
- ein Generieren eines zweiten kryptographischen Schlüssels,
   wobei das Generieren des zweiten kryptographischen Schlüssels durch ein Ableiten des zweiten kryptographischen Schlüssels von den zweiten Fingerabdrücken erfolgt.

Insbesondere erfolgt das Generieren des zweiten kryptographischen Schlüssels in Kombination mit dem Generieren des ersten kryptographischen Schlüssels.

Auch ist vorgesehen, dass aus dem (mindestens einem) ersten kryptographischen Schlüssel und/oder dem (mindestens einen) zweiten kryptographischen Schlüssel ein weiterer Schlüssel abgeleitet wird: ein dritter kryptographischer Schlüssel (auch als K12 referenzierbar). Das heißt, aus dem (mindestens einen) ersten kryptographischen Schlüssel und/oder dem (mindestens einen) zweiten kryptographischen Schlüssel wird der weitere Schlüssel generieret. Der (mindestens eine) erste kryptographische Schlüssel und/oder der (mindestens eine) zweite kryptographische Schlüssel dient dabei insbesondere als Input für eine Schlüsselableitungsfunktion.

In einer weiteren Weiterbildung der Erfindung sind die ersten Hardwarekomponenten außerdem zumindest teilweise auch der zweiten Gruppe zugeordnet und/oder die zweiten Hardwarekomponenten außerdem zumindest teilweise auch der ersten Gruppe zugeordnet.

Anders ausgedrückt gilt somit, dass das erste Gruppenlabel außerdem erste Hardwarekomponenten zusätzlich der zweiten Gruppe zuordnet und/oder dass das zweite Gruppenlabel außerdem zweite Hardwarekomponenten zusätzlich der ersten Gruppe zuordnet. Anders ausgedrückt sind erste Hardwarekomponenten insbesondere auch Teil der zweiten Gruppe und/oder zweite Hardwarekomponenten insbesondere auch Teil der ersten Gruppe. Einzelne Hardwarekomponenten gehören somit insbesondere auch mehreren Gruppen an.

Die Gruppenzugehörigkeit, die Anzahl der Gruppen und die Anzahl der Hardwarekomponenten, die Teil einer Gruppe sind, insbesondere beliebig definierbar.

In einer weiteren Weiterbildung der Erfindung weist das erfindungsgemäße Verfahren die weiteren Schritte auf:
- ein Abrufen eines Fingerabdruck-Sicherheitslevels, wobei das Fingerabdruck-Sicherheitslevel ein Sicherheitskriterium für Fingerabrücke der Hardwarekomponenten vorgibt,
- Ein Heranziehen (insbesondere auch ein Empfangen und/oder ein Abrufen) dritter Fingerabdrücke der ersten Hardwarekomponenten
   wobei die dritten Fingerabdrücke das Sicherheitskriterium erfüllen,
   (insbesondere erfolgt das Heranziehen der dritten Fingerabdrücke somit in Abhängigkeit des Fingerabdruck-Sicherheitslevels,)
- ein Generieren eines dritten kryptographischen Schlüssels,
   wobei das Generieren durch ein Ableiten des dritten kryptographischen Schlüssels von den dritten Fingerabdrücken erfolgt.

In dieser Ausführungsform liefern die Hardwarekomponenten (erste Hardwarekomponenten) in Abhängigkeit des Sicherheitskriteriums unterschiedliche Fingerabdrücke: Die ersten Fingerabdrücke oder die dritten Fingerabdrücke. Die ersten Fingerabdrücke bieten insbesondere ein geringeres Sicherheitslevel als die dritten Fingerabdrücke.

Die Idee dieser Ausführungsform ist in einer weiteren Variante dadurch realisierbar, dass sich in mindestens zwei Gruppen die gleiche Anzahl und die gleichen Hardwarekomponenten befinden, wobei die Komponenten unterschiedliche Fingerabdrücke je Gruppe ausgeben. Die erste Gruppe enthält dabei insbesondere einen "weniger-sicheren" Fingerabdruck (die ersten Fingerabdrücke) der Hardwarekomponenten (insbesondere eine Seriennummer), während für die zweite Gruppe Fingerabdrücke (die dritten Fingerabdrücke) mit erhöhter Sicherheit verwendet werden (insbesondere PUF-basierter Fingerabdruck).

Die Erfindung umfasst außerdem ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein System aufweisend:
- ein erfindungsgemäßes Computerprogramm,
- eine vertrauenswürdige Einheit (Trusted Measurement App), ausgebildet erste Fingerabdrücke bereitzustellen, insbesondere einzulesen und weiterzugeben und/oder
- Hardwarekomponenten, wobei die Hardwarekomponenten eine erste Gruppe an ersten Hardwarekomponenten umfassen.

Das System ist insbesondere als eine Internet-of-Things-System (IoT-System) ausgebildet.

Das Computerprogramm und damit eine Schlüsselableitungsfunktion (KDF) sind in einem User Space des Systems als Software-Applikation oder als Betriebssystem-Modul des Systems realisierbar. In einer weiteren Variante ist die Schlüsselableitungsfunktion und/oder die vertrauenswürdige Einheit (Trusted Measurement App) in einer Hardware-Implementierung realisierbar. Es ist auch möglich, dass jede Gruppe an Hardwarekomponenten seine eigene Instanz einer KDF hat. Auch ist es möglich, die KDF eines Secure Elements (z.B. TPM oder OpenTitan) zu verwenden, um die einzelnen Schlüssel zu generieren. Idealerweise ist die "Trusted Measurement App" auch Teil des Secure Elements oder durch Secure Boot geschützt.

Die Hardwarekomponenten sind insbesondere ausgebildet als Prozessor, CPU, Speichereinheit, RAM, Flash, ASIC, FPGA, Sensor und/oder Schnittstellen (I/O Interfaces) nach außen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein erstes Ausführungsbeispiel eines erfindungsgemäßen Systems und
- Fig. 2: ein zweites Ausführungsbeispiel eines erfindungsgemäßen Systems.

### DETAILLIERTE BESCHREIBUNG DER ERFINDUNG

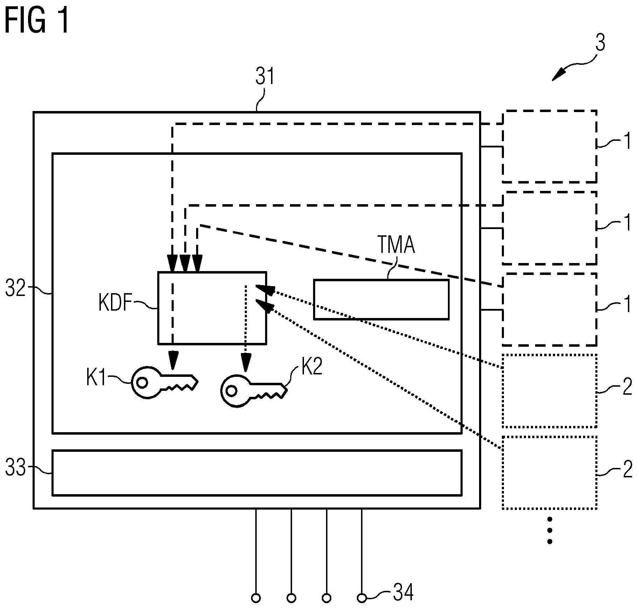

Fig. 1 zeigt eine erste Hardwarekomponenten 1 (RAM 1, Flash 1 und ASIC 1) eines Systems 3 durch ein erstes Gruppenlabel einer ersten Gruppe zugeordnet. Wenn die ersten Fingerabdrücke der ersten Hardwarekomponenten 1 aus dieser ersten Gruppe korrekt sind, und dadurch die Eingangswerte für ein Ableiten des ersten kryptographischen Schlüssels K1, insbesondere durch eine Schlüsselableitungsfunktion KDF, korrekt sind, so kann der korrekte erste Schlüssel K1 berechnet werden.

Fig. 1 zeigt außerdem eine zweite Hardwarekomponenten 2 (Sensor 2 und FPGA 2) durch ein zweites Gruppenlabel einer zweiten Gruppe zugeordnet. Deren korrekte Fingerprints (zweiten Fingerabdrücke) sind für die Berechnung des zweiten kryptographischen Schlüssels K2 nötig.

Die ersten Fingerabdrücke und die zweiten Fingerabdrücke werden durch mindestens eine vertrauenswürdige Einheit TMA (Trusted Measurement App TMA) bereitgestellt. Besonders vorteilhaft ist eine erste vertrauenswürdige Einheit TMA für die ersten Fingerabrücke und eine zweite vertrauenswürdige Einheit TMA für die zweiten Fingerabdrücke.

Durch das erfindungsgemäße Verfahren wird erreicht, dass für die erfolgreiche Generierung eines (korrekten) kryptographischen Schlüssels K1, K2 ein zuvor definierter Zustand des Systems 3 (Hardwarekomponenten 1, 2 müssen korrekt sein) vorhanden sein muss. Der Zustand des Systems 3, insbesondere Gerätes 3, wird in dieser Idee durch das Vorhandensein der korrekten Hardwarekomponenten 1, 2 aus einer Gruppe definiert.

Das System 3 weist außerdem einen Prozessor 31 (CPU 31), einen Nutzerraum 32 (User-Space), einen OS-Kernel 33 und eine Schnittstelle 34 nach außen (I/O 34) auf.

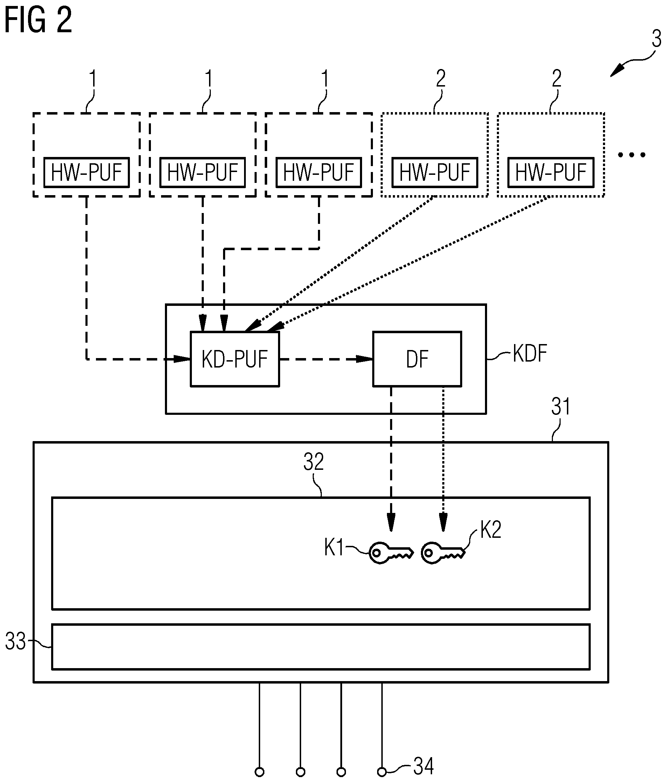

Fig. 2 zeigt die Komponenten entsprechend der Fig. 1.

Zusätzlich zeigt Hardwarekomponenten-Physical-Unclonable-Functions HW-PUFs, welche von den ersten Hardwarekomponenten 1 und den zweiten Hardwarekomponenten 2 aufgewiesen werden. Die Hardwarekomponenten-Physical-Unclonable-Functions HW-PUFs erzeugen in dieser Ausführungsform die ersten Fingerabdrücke und die zweiten Fingerabdrücke.

Fig. 2 zeigt außerdem eine Schlüsselableitungsfunktion KDF, welche eine Schlüsselableitungs-Physical-Unclonable-Function KD-PUF und eine deterministische Funktion DF für das Generieren des ersten kryptographischen Schlüssels und des zweiten kryptographischen Schlüssels aufweist.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Generieren eines ersten kryptographischen Schlüssels (K1) für ein System (3), wobei das System (3) Hardwarekomponenten (1, 2) aufweist,
mit den Schritten:
- Ein Heranziehen eines ersten Gruppenlabels einer ersten Gruppe,
wobei das erste Gruppenlabel erste Hardwarekomponenten (1) der ersten Gruppe zuordnet,
wobei die Hardwarekomponenten (1, 2) des Systems (3) die ersten Hardwarekomponenten (1) umfassen,
- Ein Heranziehen erster Fingerabdrücke der ersten Hardwarekomponenten (1),
- ein Generieren des ersten kryptographischen Schlüssels (K1),
wobei das Generieren durch ein Ableiten des ersten kryptographischen Schlüssels (K1) von den ersten Fingerabdrücken erfolgt.

2. Verfahren nach Anspruch 1,
wobei die ersten Fingerabdrücke:
- auf einem statischen Wert, basieren und/oder
- durch ein Challenge-Response Verfahren generiert wurden und/oder
- durch eine Hardwarekomponenten-Physical-Unclonable-Function (HW-PUF) generiert wurden.

3. Verfahren nach einem der vorhergehenden Ansprüche,
wobei das Generieren des ersten kryptographischen Schlüssels (K1) durch:
- eine Schlüsselableitungsfunktion (KDF) und/oder
- eine Schlüsselableitungs-Physical-Unclonable-Function (KD-PUF) erfolgt.

4. Verfahren nach einem der vorhergehenden Ansprüche,
wobei der erste kryptographische Schlüssel (K1) für eine definierte Entschlüsselung vorgesehen ist.

5. Verfahren nach Anspruch 4,
wobei die definierte Entschlüsselung durch die erste Gruppe festgelegt ist.

6. Verfahren nach einem der vorhergehenden Ansprüche,
wobei das Generieren des ersten kryptographischen Schlüssels (K1) :
- nachdem ein vertrauenswürdiger Systemzustand festgestellt wurde,
- bei einer ersten Inbetriebnahme des Systems (3),
- bei einer Wiederinbetriebnahme des Systems (3),
- im Rahmen einer Herstellung des Systems (3),
- bei einem Bootvorgang des Systems (3) und/oder
- zur Laufzeit des Systems (3)
erfolgt.

7. Verfahren nach einem der vorhergehenden Ansprüche,
wobei das Generieren des ersten kryptographischen Schlüssels (K1) durch ein Ableiten außerdem von mindestens einem Software-Fingerabdruck erfolgt,
wobei der mindesten eine Software-Fingerabdruck von mindestens einer Softwarekomponenten des Systems (3) stammt.

8. Verfahren nach einem der vorhergehenden Ansprüche,
wobei der erste kryptographische Schlüssel (K1) als:
- ein symmetrischer kryptographischer Schlüssel und/oder
- Ein asymmetrischer kryptographischer Schlüssel ausgebildet ist.

9. Verfahren nach einem der vorhergehenden Ansprüche,
wobei das erste Gruppenlabel erste Hardwarekomponenten (1) der ersten Gruppe in Abhängigkeit einer Komponentenherstellerkennzeichnung zuordnet.

10. Verfahren nach einem der vorhergehenden Ansprüche,
wobei das erste Gruppenlabel erste Hardwarekomponenten (1) der ersten Gruppe in Abhängigkeit eines Gruppen-Sicherheitslevels zuordnet.

11. Verfahren nach einem der vorhergehenden Ansprüche,
mit den weiteren Schritten:
- Ein Heranziehen eines zweiten Gruppenlabels einer zweiten Gruppe,
wobei das zweite Gruppenlabel zweite Hardwarekomponenten (2) der zweiten Gruppe zuordnet,
wobei die Hardwarekomponenten (1 ,2) des Systems (3) die zweiten Hardwarekomponenten (3) umfassen,
- ein Heranziehen zweiter Fingerabdrücke der zweiten Hardwarekomponenten (2),
- ein Generieren eines zweiten kryptographischen Schlüssels (K2),
wobei das Generieren des zweiten kryptographischen Schlüssels (K2) durch ein Ableiten des zweiten kryptographischen Schlüssels (K2) von den zweiten Fingerabdrücken erfolgt.

12. Verfahren nach Anspruch 11,
wobei die ersten Hardwarekomponenten (1) außerdem zumindest teilweise auch der zweiten Gruppe zugeordnet sind und/oder wobei die zweiten Hardwarekomponenten (2) außerdem zumindest teilweise auch der ersten Gruppe zugeordnet sind.

13. Verfahren nach einem der vorhergehenden Ansprüche,
mit den weiteren Schritten:
- ein Abrufen eines Fingerabdruck-Sicherheitslevels, wobei das Fingerabdruck-Sicherheitslevel ein Sicherheitskriterium für Fingerabrücke der Hardwarekomponenten (1, 2) vorgibt,
- Ein Heranziehen dritter Fingerabdrücke der ersten Hardwarekomponenten (1),
wobei die dritten Fingerabdrücke das Sicherheitskriterium erfüllen,
- ein Generieren eines dritten kryptographischen Schlüssels,
wobei das Generieren durch ein Ableiten des dritten kryptographischen Schlüssels von den dritten Fingerabdrücken erfolgt.

14. Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. System (3) aufweisend:
- ein Computerprogramm nach Anspruch 14,
- eine vertrauenswürdige Einheit (TMA), ausgebildet erste Fingerabdrücke bereitzustellen und/oder
- Hardwarekomponenten (1, 2), wobei die Hardwarekomponenten (1, 2) eine erste Gruppe an ersten Hardwarekomponenten (1) umfassen.
